# FASCICULE DE BREVET EUROPEEN

(11) **EP 0 574 290 B1**
(45) Date de publication et mention de la délivrance du brevet: **17.04.1996**
(21) Numéro de dépôt: 93401401.0
(22) Date de dépôt: 02.06.1993
(51) Int. Cl.: B23K 35/00, B23K 20/02, B23K 20/24, F01D 5/00

(54) **Procédé de pose d'un insert servant de revêtement protecteur sur une pièce en acier martensitique ou en alliage de titane**
Verfahren zum Anbringen von Schutzüberzügen bildenden Einsätzen auf Gegenständen aus martensitischens Stahl oder aus Titanlegierungen
Method for the application of protective coating inserts on martensitic steel or titanium alloy workpieces

(30) Priorité: 05.06.1992 FR 9206860
(43) Date de publication de la demande: 15.12.1993
(73) Titulaire: GEC ALSTHOM ELECTROMECANIQUE SA, F-75016 Paris (FR)
(72) Inventeur: Coulon, Andre, F-90160 Bessoncourt (FR)
(74) Mandataire: Fournier, Michel

(56) Documents cités:
- EP-A- 0 123 702
- EP-A- 0 171 230
- FR-A- 1 195 124
- FR-A- 1 268 949
- GB-A- 2 042 393
- US-A- 3 952 939

## Description

La présente invention concerne un procédé de pose d'un insert servant de revêtement protecteur à une pièce en acier martensitique ou en alliage de titane.

Ces revêtements sont destinés à diminuer l'usure en service.

Les pièces en question peuvent être des pièces de machines pour l'énergie telles que des turbines, et constituer des éléments de première importance par leur fonction,leurs sollicitation et leur coût.

Citons l'exemple des aubes mobiles des turbines qui se détériorent en service par abrasion, érosion ou corrosion.

La protection des emplacements critiques de ces aubes est donc un impératif pour la survie prolongée de telles pièces.

Une fabrication classique de ce type de pièce est un forgeage de précision à partir d'un outillage spécifique, appelé matrice de forme, véritable négatif de la pièce à forger constitué en 2 parties, lesquelles viendront en contact sous la pression d'un pilon ou d'une presse et se refermeront sur l'ébauche préalablement mise en température. Dans la fabrication de composants de forme aussi complexe que les aubes de turbine, plusieurs outillages sont nécessaires à la suite :
Tout d'abord une matrice de forme : le contour de l'aube est formé,
Ensuite une matrice à vrillage si l'aube est vrillée,
Et enfin une matrice de calibrage.

Un autre fabrication classique est le moulage qui ne diffère du forgeage que parce que la matrice de forme est ici un moule et l'ébauche un matériau à l'état liquide que l'on introduit à l'intérieur de l'enveloppe.

L'insert de protection est fabriqué, dans la solution classique actuelle, indépendamment de l'aube sur laquelle il sera fixé. Cet insert peut être usiné dans la masse à partir d'un bloc de matière, forgé, moulé puis après avoir été ajusté sur le bord d'attaque de l'aube est brasé ou soudé sur celui-ci.

L'insert est un matériau dur : alliage à base de cobalt, alliages biphasés à base de carbures (chrome, tungstène, titane, etc...) mélangés à une matrice.

Une technique récente d'obtention de ce type est le procédé HIP (Hot Isostatic Pressing)- faisant appel à la métallurgie des poudres, à un encapsulage de poudre à la forme de l'insert et à la mise sous pression isostatique dans un four à atmosphère déterminée à haute température pour transformer la poudre en un barreau, plaque, etc...compacté à chaud.
. Le procédé de fixation de l'insert sur la pièce entraîne des défauts d'homogénéité aux frontières entre feuillard et insert d'une part et entre pièce et feuillard d'autre part lorsqu'il met en oeuvre une brasure ou entre insert et pièce lorsqu'il met en oeuvre une soudure.
. Il faut alors appliquer des traitements thermiques pour faire disparaître ces défauts mais ils ont l'inconvénient de faire perdre à la pièce ses propriétés métallurgiques.

Le procédé selon l'invention ne présentant pas cet inconvénient est caractérisé en ce que qu'on interpose entre l'insert et la pièce une couche métallique constituée d'éléments compatibles avec la pièce et susceptibles de générer des composants à phases intermétalliques lors des traitements thermiques notamment par compactage à chaud (HIP), la température de fusion de cette couche étant supérieure de 20°C à 50°C à la température θ de compactage utilisée, on chauffe l'ensemble comprenant la pièce et l'insert jusqu'à une température de forgeage, inférieure d'au moins 20°C à θ, on introduit l'ensemble pièce-insert dans une matrice de calibrage chauffée, on procède au calibrage de l'ensemble pièce-insert, on sort l'ensemble pièce-insert de la matrice et on le refroidit,
on introduit l'ensemble pièce-insert dans un four à pression isostatique et on compacte l'ensemble à une pression supérieure à 1000 bars et à la température θ, on refroidit ensuite l'ensemble jusqu'à la température ambiante.

Il ne reste plus ensuite qu'à usiner la pièce munie de son insert pour lui donner sa forme finale.

Lorsque la pièce a revêtir est en acier martensitique le feuillard peut être constitué soit de cuivre pur, soit de Nickel avec de l'indium, soit de nickel avec de l'étain. Il peut également être constitué d'un alliage de deux ou trois des éléments suivants Ni, Cu, Al de préférence 70 % Ni, 15 % Cu, 15 % Al.

Lorsque la pièce est en alliage de titane le feuillard est constitué d'un alliage de titane et d'indium ou d'un alliage de deux ou de trois des éléments suivants: Ni, Ti, Al; de préférence 50 % Al, 25% Ni, 25 % Ti,

L'invention va maintenant être décrite plus en détail en se référant à un mode de réalisation particulier cité à titre d'exemple représenté sur les dessins annexés.

La figure 1 représente une aube de turbine munie de son insert.

La figure 2 représente une coupe de la figure 1.

La figure 3 représente une variante de la figure 2.

La pièce 4 représente une aube de turbine et son insert selon une variante.

La pièce qui est ici une aube de turbine a été obtenue par forgeage ou par moulage et l'insert 2 a été obtenu par toute méthode classique, usinage dans la masse à partir d'un bloc de matière, forgeage, moulage ou même opération de pressage isostatique à chaud. Dans ce dernier cas on a encapsulé de la poudre à la forme de l'insert 2 et on l'a la mise sous pression isotherme dans un four à haute température pour transformer la poudre en un barreau, plaque etc..par compactage à chaud.

L'insert 2 n'a pas encore reçu sa passe de finition.

Le contour de l'insert 2 est ébavuré et l'angle du contour avec la surface de l'insert 2 destinée à être apparente est cassé et arrondi par meulage.

Un feuillard 3 d'épaisseur minimum de 1/10 mm et de 3/10 mm maximum servant pour la brasure haute température est découpé de façon à excéder de 3 à 5 mm le contour de l'insert 2.

Lorsque l'aube de turbine est en acier martensitique le feuillard 3 est constitué soit de cuivre pur soit de nickel avec de l'indium soit de nickel avec de l'étain.

Il peut également être constitué d'un alliage de deux ou trois éléments suivants Ni, Cu, Al (avec ou sans ajout d'indium ou d'étain).

Lorsque l'aube est en alliage de titane le feuillard 3 est constitué de titane avec de l'indium ou d'un alliage de deux ou de trois des éléments suivants Ni, Ti, Al.

Le feuillard 3 est placé sous l'insert 2 et agrafé électriquement par points de soudure 4 (un point tous les 50mm).

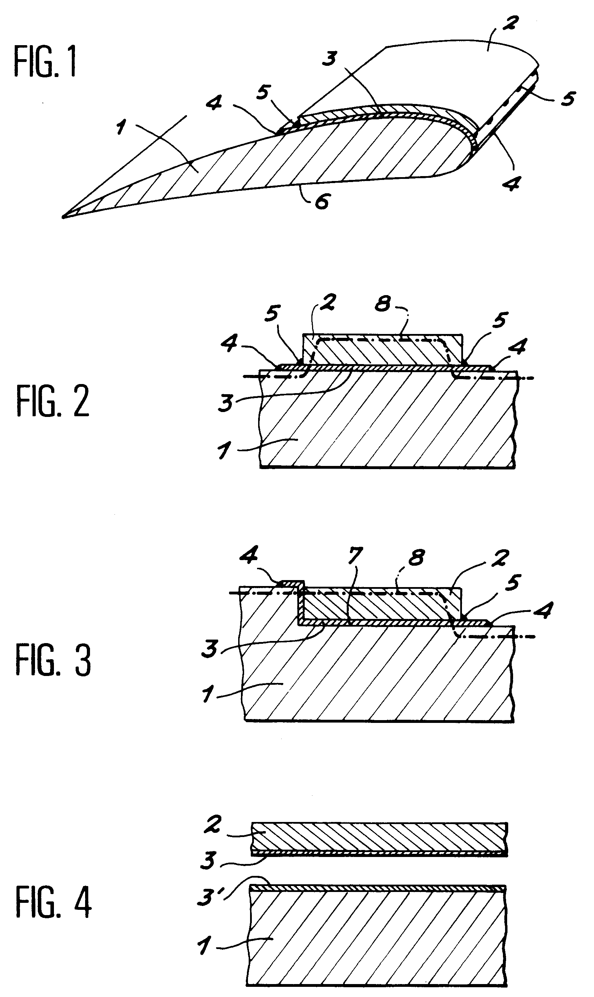

L'ensemble insert 2 feuillard 3 est mis en place sur la pièce 1 (par exemple une aube de turbine) et agrafé électriquement également par points de soudure 5 (un point 5 tous les 50 mm en alternance avec les points de soudure 4 insert 2/feuillard 3/). L'ensemble insert 2 feuillard 3 peut être mis en surépaisseur (figure 1 et 2) ou placé dans un logement 7 de la pièce.

L'ensemble 6 pièce insert est chargé dans un four jusqu'à la température de forgeage et placé dans une matrice de calibrage isotherme c'est-à-dire chauffée à une température légèrement inférieure à la température de forgeage.

Lors du calibrage la forme de la pièce 1 avec son insert 2 est légèrement modifié (les dimensions varient de moins de 5 % ).
. Après le calibrage la pièce 1 munie de son insert 2 est sortie de la matrice et subit un refroidissement contrôlé jusqu'à la température ambiante.
. La pièce munie de son insert 2 est ensuite placée verticalement dans un four à pression isostatique à chaud (HIP) et subit un compactage final. Les paramètres de compactage-pression et température- sont compatibles avec les matériaux en présence.

Le feuillard 3 à la température θ de HIP se transforme en composants à phases intermétalliques qui diffusent dans le métal de l'insert 2 et dans le métal de la pièce 1.

Ces phases intermétalliques assureront la qualité de la liaison.

La température du four à pression isostatique θ est choisie telle qu'elle soit au moins supérieure de 20° à 50°C à celle de la phase de calibrage mais inférieure d'au moins 20° à 50°C à la température de fusion du feuillard 3. Le cycle de refroidissement sera identique à celui du calibrage.

La pression est choisie supérieure à 1000 bars.

Après refroidissement on meulera (on usinera par rectification) la partie débordante du feuillard 3 non intégrée au substrat pour obtenir le profil final.

Deux exemples de couples de matériaux sont cités ci-après. Le produit concerné est une grande aube de turbine dont il faut protéger le bord d'attaque contre les effets de l'érosion par goutelettes d'eau.
- **Exemple 1** :: Matériau de base : acier martensitique 12 % Cr
Matériau d'insert : alliage base cobalt (> 60 % Co)
Feuillard intermédiaire NiAlCu (70 % Ni, 15 % Cu, 15 % Al)
Point de fusion de feuillard 1250°C
Température de forgeage (calibrage) 1050°C
Température de HIP 1200°C
Pression de HIP 1500 bars
- **Exemple 2** :: Matériau de base : alliage titane TA6V
Matériau d'insert : matériau biphasé TiBeta + TiC
Feuillard intermédiaire NiTiAl (50 % Al, 25 % Ni, 25 % Ti)
Point de fusion du feuillard 1100°C
Température de forgeage (calibrage) 970°C
Température de HIP 1050°C
Pression de HIP 1800 bars.

Selon une variante de l'invention représentée à la figure 4 lorsque les matériaux de l'insert (2) et de la pièce (1) sont tout à fait incompatibles, au lieu d'utiliser une seule couche constituée par un feuillard, on utilise deux couches 3, 3' déposées l'une sous l'insert 2 l'autre sur la pièce 1. Elles peuvent être déposées par pulvérisation (sputtering); par évaporation ionique; électrodéposition; par voie chimique; dépôt au pinceau etc...

Ainsi pour déposer un insert en stellite sur une aube en alliage de titane la couche 3 a l'une des compositions vue plus haut compatible avec l'alliage de titane.

La couche 3' a une composition compatible avec l'acier martensitique comme vue plus haut.

## Revendications

1. Procédé de pose d'un insert (2) servant de revêtement protecteur à une pièce (1) en acier martensitique ou en alliage de titane caractérisé en ce qu'on interpose entre l'insert (2) et la pièce (1) une couche métallique (3) constituée d'éléments compatibles avec la pièce (1) et susceptibles de générer des composants à phases intermétalliques lors des traitements thermiques notamment par compactage, la température de fusion de cette couche étant supérieure de 20°C à 50°C à la température θ de compactage utilisée, on chauffe l'ensemble (6) comprenant la pièce (1) et l'insert (2) jusqu'à une température de forgeage, inférieure d'au moins 20°C à θ, on introduit l'ensemble (6) pièce-insert dans une matrice de calibrage chauffée, on procède au calibrage de l'ensemble (6) pièce-insert, on sort l'ensemble (6) pièce-insert de la matrice et on le refroidit,
on introduit l'ensemble (6) pièce-insert dans un four à pression isostatique et on compacte l'ensemble (6) à une pression supérieure à 1000 bars et à la température θ, on refroidit ensuite l'ensemble (6) jusqu'à la température ambiante.

2. Procédé selon la revendication 1 pour une pièce (2) en acier martérisitique caractérisé en ce que le feuillard (3) est constitué soit de cuivre pur, soit de nickel avec de l'indium, soit de nickel avec de l'étain.

3. Procédé selon la revendication pour une pièce (2) en acier martensitique caractérisé en ce que le feuillard (3) est constitué d'un alliage de deux ou des trois des éléments suivants: Ni, Cu, Al.

4. Procédé en ce que la revendication 3 caractérisé en ce que l'alliage est constitué de 70 % Ni, 15 % Cu, 15 % Al.

5. Procédé selon la revendication 1 pour une pièce (2) en alliage en titane caractérisé en ce que le feuillard (3) est constitué d'un alliage de titane et d'indium.

6. Procédé selon la revendication 1 pour pièce (2) en alliage en titane caractérisé en ce que le feuillard (3) est constitué d'un alliage de deux ou de trois des éléments suivants: Ni, Ti, Al.

7. Procédé selon la revendication 6 caractérisé en ce que l'alliage du feuillard (3) est constitué de 50 % Al, 25 % Ni, 25 % Ti.

8. Procédé selon la revendication 1 caractérisé en ce que la couche (3) déborde de l'insert (2).

9. Procédé selon la revendication 8 caractérisé en ce que la couche (3) est un feuillard (3) agrafé sur la pièce (1) et en ce que l'insert (2) est agrafé sur le feuillard (3) avant que l'ensemble (6) soit introduit dans la matrice de calibrage.

10. Procédé selon la revendication 9 caractérisé en ce que l'agrafage est réalisé par des soudures par points (4, 5).

11. Procédé selon la revendication 10 caractérisé en ce que les points d'agrafage (4) de l'insert (2) sur le feuillard (13) sont disposés entre les points d'agrafage (5) du feuillard (3) sur la pièce (1).

12. Procédé selon la revendication 1 caractérisé en ce que pour le dépôt d'un insert (2) en acier sur une pièce (1) en alliage de titane on dépose une couche intermédiaire (3') sous l'insert (2) ladite couche (3') étant en cuivre pur, en nickel avec de l'indium ou de l'étain ou dans un alliage de deux ou trois des éléments suivants: Ni, Cu, Al; on dépose la couche (3) sur la pièce (1) avant avec d'assembler les couches (3, 3') de la pièce (1) et de l'insert (2), la couche (3) étant en alliage de titane et d'indium ou un alliage de deux ou de trois des éléments suivants: Ni, Ti, Al.

## Claims

1. A method of installing an insert (2) serving as protective cladding for a part (1) made of martensitic steel or of titanium alloy, the method being characterized in that a metal layer (3) is interposed between the insert (2) and the part (1), which layer is constituted by elements that are compatible with the part (1) and suitable for generating intermetallic phase components during heat treatment, in particular hot isostatic pressing (HIP), the melting temperature of said layer being 20°C to 50°C greater than the pressing temperature θ used, the assembly (6) comprising the part (1) and the insert (2) is heated to a forging temperature that is at least 20°C less than θ, the part-insert assembly (6) is inserted in a heated calibration matrix, the part-insert assembly (6) is calibrated, the part-insert assembly (6) is removed from the matrix, and it is cooled;
the part-insert assembly (6) is inserted in an isostatic pressure oven and the assembly (6) is compacted to a pressure greater than 1,000 bars at the temperature θ, after which the assembly (6) is cooled to ambient temperature.

2. A method according to claim 1, for a part (2) made of martensitic steel, characterized in that the foil (3) is constituted either by pure copper, or by nickel with indium, or by nickel with tin.

3. A method according to claim [1] for a part (2) made of martensitic steel, characterized in that the foil (3) is constituted by an alloy of two or three of the following elements: Ni, Cu, Al.

4. A method according to claim 3, characterized in that the alloy is constituted by 70% Ni, 15% Cu, 15% Al.

5. A method according to claim 1, for a part (2) made of titanium alloy, characterized in that the foil (3) is constituted by an alloy of titanium and indium.

6. A method according to claim 1, for a part (2) made of titanium alloy, characterized in that the foil (3) is constituted by an alloy of two or three of the following elements: Ni, Ti, Al.

7. A method according to claim 6, characterized in that the alloy of the foil (3) is constituted by 50% Al, 25% Ni, 25% Ti.

8. A method according to claim 1, characterized in that the layer (3) projects beyond the insert (2).

9. A method according to claim 8, characterized in that the layer (3) is a foil (3) tacked to the part (1), and in that the insert (2) is tacked to the foil (3) before the assembly (6) is inserted in the calibration matrix.

10. A method according to claim 9, characterized in that the tacking is performed by spot welding (4, 5).

11. A method according to claim 10, characterized in that the spots (4) tacking the insert (2) to the foil (3) are disposed between the spot (5) tacking the foil (3) to the part (1).

12. A method according to claim 1, characterized in that to deposit an insert (2) of steel on a part (1) of titanium alloy, an intermediate layer (3') is deposited beneath the insert (2), said intermediate layer (3') being of pure copper, of nickel with indium, or with tin, or being an alloy of two or three of the following elements: Ni, Cu, Al; the layer (3) is deposited on the part (1) before assembling together the layers (3, 3') of the part (1) and of the insert (2), with the layer (3) being an alloy of titanium and indium or an alloy of two or three of the following elements: Ni, Ti, Al.

## Patentansprüche

1. Verfahren zum Aufbringen eines Schilds (2) als Schutzschild auf ein Bauteil (1) aus martensitischem Stahl oder einer Titanlegierung, dadurch gekennzeichnet, daß man zwischen das Schild (2) und das Bauteil (1) eine Metallfolie (3) aus mit dem Bauteil (1) vereinbaren Elementen einfügt, die bei der thermischen Behandlung, insbesondere der Kompaktierung, Komponenten mit intermetallischen Phasen bilden können, wobei die Schmelztemperatur dieser Folie um 20 bis 50°C über der verwendeten Kompaktierungstemperatur Θ liegt, daß die aus dem Bauteil (1) und dem Schild (2) gebildete Einheit bis zu einer Schmiedetemperatur erwärmt wird, die mindestens um 20°C unter der Temperatur Θ liegt, daß die Einheit (6) aus dem Bauteil und dem Schild in eine geheizte Kalibriermatrix eingebracht wird, daß diese Einheit (6) aus Bauteil und Schild kalibriert wird und daß diese Einheit aus Bauteil und Schild dann aus der Matrix entnommen und abgekühlt wird, daß die einheit (6) aus Bauteil und Schild dann in einen Ofen mit isostatischer Kompaktierung gebracht wird und bei einem Druck oberhalb von 1000 Bar und bei der Temperatur Θ kompaktiert wird, und daß dann die Einheit (6) bis auf Umgebungstemperatur abgekühlt wird.

2. Verfahren nach Anspruch 1 für ein Bauteil (2) aus martensitischem Stahl, dadurch gekennzeichnet, daß die Folie (3) entweder aus reinem Kupfer oder aus Nickel mit Indium oder aus Nickel mit Zinn besteht.

3. Verfahren nach Anspruch 1 für ein Bauteil (2) aus martensitischem Stahl, dadurch gekennzeichnet, daß die Folie (3) aus einer Legierung von zwei oder drei der Elemente Ni, Cu, Al besteht.

4. Verfahren nach Anspruch 3, dadurch gekennzeichnet, daß die Legierung aus 70% Ni, 15% Cu, 15% Al besteht.

5. Verfahren nach Anspruch 1 für ein Bauteil (2) aus einer Titanlegierung, dadurch gekennzeichnet, daß die Folie (3) aus einer Legierung aus Titan und Indium gebildet wird.

6. Verfahren nach Anspruch 1 für ein Bauteil (2) aus einer Titanlegierung, dadurch gekennzeichnet, daß die Folie (3) aus einer Legierung von zwei oder drei der Elemente Ni, Ti, Al besteht.

7. Verfahren nach Anspruch 6, dadurch gekennzeichnet, daß die Legierung der Folie (3) aus 50% Al, 25% Ni, 25% Ti besteht.

8. Verfahren nach Anspruch 1, dadurch gekennzeichnet, daß die Folie (3) über das Schild (2) vorsteht.

9. Verfahren nach Anspruch 8, dadurch gekennzeichnet, daß die Folie (3) an das Bauteil angeheftet wird, und daß das Schild (2) an die Folie (3) angeheftet wird, ehe die Einheit (6) in die Kalibriermatrix eingeführt wird.

10. Verfahren nach Anspruch 9, dadurch gekennzeichnet, daß das Anheften mittels Schweißpunkten (4, 5) erfolgt.

11. Verfahren nach Anspruch 10, dadurch gekennzeichnet, daß die Schweißpunkte (4) zum Anheften des Schilds (2) an der Folie (3) zwischen den Schweißpunkten (5) liegen, mit denen die Folie (3) an das Bauteil (1) angeheftet wird.

12. Verfahren nach Anspruch 1, dadurch gekennzeichnet, daß für das Aufsetzen eines Schilds (2) aus Stahl auf ein Bauteil (1) aus einer Titanlegierung eine Zwischenschicht (3') unter dem Schild (2) angebracht wird, die aus reinem Kupfer, aus Nickel mit Indium oder Zinn oder aus einer Legierung von zwei oder drei der Elemente Ni, Cu, Al besteht, und daß die Folie (3) auf das Bauteil (1) vor dem Zusammenfügen mit der Zwischenschicht (3') des Schilds (2) aufgebracht wird, wobei die Folie (3) aus einer Legierung von Titan mit Indium oder einer Legierung von zwei oder drei der Elemente Ni, Ti, Al besteht.
